# EUROPÄISCHE PATENTSCHRIFT

(11) **EP 2 634 688 B1**
(45) Veröffentlichungstag und Bekanntmachung des Hinweises auf die Patenterteilung: **24.06.2020**
(21) Anmeldenummer: 13157013.7
(22) Anmeldetag: 27.02.2013
(51) Int. Cl.: G06F 3/0488

(54) **Verfahren und Vorrichtung zur einfachen Steuerung von Kommunikationsdiensten im Fahrzeug durch Einsatz von Touch-Gesten auf berührungssensitiven Bildschirmen**
Method and device for the simple control of communication services in a vehicle by employing touch gestures on touch sensitive screens
Procédé et dispositif pour la commande simple de services de communication dans un véhicule par l'utilisation de gestes tactiles sur des écrans sensibles au contact

(30) Priorität: 28.02.2012 DE 102012101629
(43) Veröffentlichungstag der Anmeldung: 04.09.2013
(73) Patentinhaber: Deutsche Telekom AG, 53113 Bonn (DE)
(72) Erfinder: Scheerbarth, Thomas, 12555 Berlin (DE); Zhou, Jianshen, 12357 Berlin (DE); Oberle, Frank, 10623 Berlin (DE); Seide, Stefan, 10407 Berlin (DE)
(74) Vertreter: 2K Patentanwälte Blasberg Kewitz & Reichel

(56) Entgegenhaltungen:
- EP-A1- 2 362 186
- EP-A2- 1 441 201
- FR-A1- 2 954 238
- US-A1- 2003 234 824
- US-A1- 2010 063 818
- Apple: "iPad User Guide For iOS 5.0 Software", Apple Inc, 20. Oktober 2011 (2011-10-20), Seiten 1-141, XP055019962, Gefunden im Internet: URL:http://manuals.info.apple.com/en/ipad_ user_guide.pdf [gefunden am 2012-02-21]

## Beschreibung

Die Erfindung betrifft ein Verfahren und eine Vorrichtung zur vereinfachten Steuerung von Kommunikationsdiensten z.B. im Fahrzeug durch Einsatz von Gesten, vorzugsweise Berührungsgesten auf berührungssensitiven Bildschirmen, sowie eine durchgehende Interaktionslogik, welche die Bedienung der Applikation weitestgehend ablenkungsfrei während der Fahrt ermöglicht.

Diese Gesten können auf verschiedenen Endgeräten mit berührungssensitiven Bildschirmen wie beispielsweise Smartphones, Tablets oder anderen in der Fahrzeugeinrichtung enthaltenen Bildschirmen (zum Beispiel einer Head Unit) angewendet werden.

Der Einsatz der Gestensteuerung erfolgt in Zusammenhang mit einer akustisch und grafisch unterlegten Dialogführung, welche den Nutzer zu bestimmten Zeiten die Möglichkeiten gibt, diese Gesten anzuwenden. Außerdem können die Gesten in bestimmten Dialogschritten auch ohne das akustische Interface direkt angewendet werden.

Damit lassen sich Nutzerschnittstellen insbesondere für die Applikationsbedienung im Fahrzeug einfach, intuitiv und robust gegen Umgebungsgeräusche realisieren.

### Gebiet der Erfindung:

Lange Zeit beschränkte sich der zusätzlich zur Fahraufgabe im Auto zu bedienende Funktionsumfang auf Bedienung von Elementen im Fahrzeuginnenraum (z.B. Klimaanlage), auf Entertainment wie z.B. Radio, MP3, CD oder Navigation. Zur Bedienung genügten herkömmliche, haptische Bedienelemente wie Schalter oder Touch Screen.

Die zunehmende Vernetzung führt inzwischen dazu, dass das Internet und mit dem Internet auch textbasierte Nachrichten- und Kommunikationsangebote wie z.B. Email, News-Feeds oder Social-Networking im Auto eine immer größere Rolle spielen. In kaum einem Modell der gehobenen Preisklassen wird heute noch auf Internet im Auto verzichtet. Und überall dort, wo noch keine On Board Unit mit Internetzugang zur Verfügung steht, übernehmen Smartphones zunehmend diese Rolle.

Insbesondere textbasierte Informations- und Kommunikationsangebote im Auto stellen die Gestaltung des Benutzer-Interfaces vor vollkommen neue Herausforderungen. Der Touch-Screen im GrafikModus wird den gestiegenen Anforderungen aufgrund der Komplexität der neuen Aufgaben nicht mehr gerecht. Mentale Überbeanspruchung und Fahrerablenkung sind die Folge. Das Suchen in Adressbüchern, das Auslösen oder Annehmen von Telefonanrufen, das Lesen von Emails, SMS oder Nachrichten im sozialen Netzwerk bis hin zum Verfassen von Nachrichten wie Emails, SMS oder Nachrichten ins soziale Netzwerk sind für das herkömmliche grafische User Interface, basierend auf Touch-Screen mit grafischen Bedienelementen wie Buttons, Eingabefeldern, Menüs oder Textanzeigen zu komplex und stellen wegen der daraus entstehenden Fahrerablenkung eine ernsthafte Gefahr für die Sicherheit im Straßenverkehr dar.

Viele Hersteller von Automotive User Interfaces oder PNDs (TomTom, Garmin, Magellan, Mio, Navigon, Medion, Blaupunkt, Sony, Falk, ...) setzen daher zunehmend auf ein multimodales Interface, bei denen der Touch-Screen durch eine zusätzliche Sprachsteuerung ergänzt wird. Alle multimodalen Ansätze zeichnen sich dadurch aus, dass sie durch den Einsatz von Sprachaus- und -eingaben versuchen, die Augen und Hände des Fahrers zu entlasten, um dadurch zur Reduzierung der Fahrerablenkung beizutragen.

Da die Güte der Spracherkennung noch immer sehr stark von der elektroakustischen Eingangsanordnung, bestehend aus Mikrofonen und A/D Wandlern, abhängt, eignet sich der Einsatz eines Sprachinterfaces besonders für die On Board Unit, bei der von einer Integration in das Audiosystem des Fahrzeugs ausgegangen werden kann. Hier können auf den Fahrer ausgerichtete Mikrofonanlagen oder Mikrofonarrays mit spezieller Richtcharakteristik für ausreichende Sprachqualität und so für hohe Spracherkennungsraten sorgen.

Aus der US 2 954 238 A1 ist ein Verfahren bekannt bei dem zwei unterschiedliche Benutzermodi für ein Touchdisplay bereitgestellt werden, die sich durch die Darstellung der Symbole auf dem Bildschirm unterscheiden. So wird die Größe der Symbole in Abhängigkeit von einem Ereignis, zum Beispiel der Geschwindigkeit eines Fahrzeugs verändert. So soll zB. bei hoher Geschwindigkeit wenige große Symbole dargestellt werden, die eine Bedienung auch bei hoher Geschwindigkeit für den Benutzer vereinfachen.

Die EP 2 362 186 A1 erlaubt das Umschalten eines Benutzerinterface zwischen einem grafischen Benutzerinterface und einem Sprachinterface, sodass der Benutzer in der Lage ist, mit unterschiedlichen Eingabeformen ein Benutzerinterface zu steuern. Die US 2010/063818 A1 offenbart ein Sprachfeedback für Information, die auf einem Display angezeigt worden. Hierbei erfolgt eine Bestätigung über eine Sprachausgabe, für die Auswahl von Menüs, die auf einem Display angezeigt werden.

Für die Nutzung von Smartphones im Auto erscheint der Ansatz jedoch nicht immer geeignet, da die Qualität des Spracheingangssignals je nach Ausstattung des Smartphones, Position des Smartphones relativ zum Fahrer und Umgebungsgeräusch im Fahrzeuginnenraum sehr unterschiedlich sein kann und dadurch auch die Klassifikationsraten einer Spracherkennung sehr stark variieren können.

### Übersicht über die Erfindung:

Sowohl für die Verwendung des Smartphones im Auto als auch für die On Board Unit, die mit einem Touch-Screen ausgerüstet ist, werden zwei Ansätze zur Realisierung eines Benutzerinterfaces beschrieben, die für die Anwendung im Auto sowohl Fahrerablenkung als auch Beanspruchung von Händen und Augen auf ein Minimum reduzieren und die selbst hochkomplexe, internetbasierte Anwendungen wie textbasierte Nachrichten- und Kommunikationsdienste im Auto ermöglichen.

Für On Board Units, bei denen von einer Integration in das Audiosystem des KFZ-Innenraums ausgegangen werden kann und bei denen von einer auf den Fahrer des KFZ ausgerichteten Mikrofonanlage ausgegangen werden kann, die für die Güte des Spracheingangssignals ausreichende Verhältnisse gewährleistet, ersetzt ein Sprachinterface mit Spracheingabe und automatischer Spracherkennung sowie Sprachausgabe und Text-to-Speech (Technologie zur automatischen Übersetzung von Text in gesprochene Sprache) die wesentlichen Ein- und Ausgabefunktionen des Touch Screens. Für diesen Anwendungskontext wurde der sogenannte "Sprachmodus" entwickelt.

Überall dort, wo keine On Board Units mit Internetzugang zur Verfügung stehen, kann das Smartphone wesentliche Funktionen der On Board Unit übernehmen. Benötigt wird hierbei vorzugsweise eine Halterung für das Smartphone in Fahrernähe inklusive Ladefunktion. Da bei der Nutzung von Smartphones im Auto nicht immer von einer ausreichenden Güte des Spracheingangssignals ausgegangen werden kann, wird hier auf den Einsatz der Spracherkennung verzichtet. Stattdessen erfolgt die Bedienung der Applikation mit Hilfe eines einfachen und leicht erlernbaren Vokabulars an Gesten auf dem Touch-Screen. Die sonst übliche Vielfalt an grafischen Bedienelementen wie Menüs, Buttons oder Eingabefeldern weicht im sogenannten Gestenmodus einer einzigen, einheitlichen Fläche, die den gesamten Touch-Screen einnimmt und auf der die Gesten zur Bedienung des Systems eingegeben werden können. Ziel und Zweck des Gestenmodus ist es, den Content, das bedeutet Text- oder Audio-Content, durch den sich beispielsweise E-Mails, News oder Podcasts auszeichnen, rein akustisch wiederzugeben und dabei das Grafik Interface quasi auszublenden, so dass der Fahrer den Content konsumieren kann ohne auf das Display des Smartphones schauen zu müssen. Um die Contentausgabe aber steuern zu können, kommt die Gestensteuerung zum Einsatz.

Aufgabe der Erfindung ist es, Verfahren und Vorrichtungen bereitzustellen, die es ermöglichen, telekommunikationsbasierte Dienste unter besonderen Bedingungen, beispielsweise in Fahrzeugen, durch den Nutzer einfach zu bedienen und sicher zu nutzen.

Der Erfindung umfasst ein Verfahren zur Steuerung eines Endgerätes, vorzugsweise eines mobilen Endgerätes oder eines Fahrzeuginformationssystem, das einen Lautsprecher umfasst und das einen berührungsempfindlichen Bildschirm aufweist, wobei das Endgerät einen ersten grafischen Bedienmodus umfasst, bei dem Informationen grafisch dargestellt werden, und eine Steuerung des Endgerätes über die Berührung von grafisch dargestellten Symbolen erfolgt, wobei die Berührung des Symbols eine Funktion auslöst, gekennzeichnet durch die Schritte:
- Umschalten in einen zweiten Bedienmodus, der grundsätzlich keine Interaktion von grafischen Symbolen und Berührungen erlaubt, oder lediglich mit einem grafischen Symbol versehen ist, um in den Grafikmodus zurückwechseln. Hierbei ist in einer möglichen Ausführungsform der Bildschirm dunkel oder eine andere Farbe und umfasst keinerlei Anzeige oder lediglich das Symbol, um in den Grafikmodus zurückzukehren. Es ist auch denkbar, dass der alte Desktop lediglich überlagert ist, so dass dieser etwas durchschimmert. Letztendlich soll keinerlei grafische Ausgabe den Benutzer bei der Steuerung ablenken. Danach erfolgt ein
- Steuerung des Endgerätes lediglich durch eine geringe Anzahl von Gesten auf dem Bildschirm, die unabhängig von der Berührung von Symbolen Funktionen auf dem mobilen Endgerät auslösen;
- Ausgabe der Funktionsergebnisse über den Lautsprecher. Es soll somit ein Zusammenhang zwischen Eingabe und Grafikausgabe vermieden werden.

In einer möglichen Ausführungsform sind im zweiten Bedienmodus der überwiegende Teil des berührungsempfindlichen Bildschirms eine Eingabefläche für die Gesten darstellt unabhängig von Symbolen. Der verbleibende Teil kann z.B. durch den Knopf zum Zurückschalten belegt werden.

In einer möglichen Ausführungsform In einer alternativen Ausführungsform ist der berührungsempfindlichen Bildschirms eine Eingabefläche für die Gesten darstellt und mit einem 'Milchglas-Effekt' überzogen ist, welcher die darunterliegende grafische Bedienoberfläche anzeigt. Diese Darstellung sollte so zurückhaltend sein, dass nur schwerlich ersichtlich ist, um eine Ablenkung durch die darunterliegende grafische Bedienoberfläche zu vermeiden.

In einer alternativen Ausführungsform ist im zweiten Bedienmodus der überwiegende Teil des berührungsempfindlichen Bildschirms eine Eingabefläche für die Gesten darstellt, mit einem 'Milchglas-Effekt' überzogen ist und den aktuell vorgelesenen Content grafisch markiert.

In einer alternativen Ausführungsform wird im zweiten Bedienmodus die Markierung des vorgelesenen Content synchron zur Vorleseposition mitgeführt.

In einer alternativen Ausführungsform wird im zweiten Bedienmodus ein Pausenmodus aktiviert, der die Ausgabe der Funktionsergebnisse auf dem Lautsprecher unterbricht, um diese dann zu einem späteren Zeitpunkt fortzusetzten, wobei der Pausenmodus vorzugsweise durch einfaches Berühren des Bildschirms (Tap Geste)aktiviert wird, wobei der Pausenmodus durch erneutes Berühren beendet werden kann und die akustische Wiedergabe fortgesetzt wird.

In einer alternativen Ausführungsform wird im zweiten Bedienmodus ein Pausenmodus aktiviert, wobei eine Menüführung und/oder eine Auswahl von Optionen im zweiten Bedienmodus durch eine sequentielle Ausgabe von einzelnen Menüeinträgen/Optionen mit Pausen erfolgt, um in den Pausen eine Geste zu empfangen, die als Auswahl dient, um eine Funktion auszulösen.

In einer alternativen Ausführungsform wird im zweiten Bedienmodus ein Pausenmodus aktiviert, wobei nach längeren Pausen ein Landmarking durchgeführt wird, bei dem die aktuelle Position in einem Menü und/oder einer Auswahl über den Lautsprecher wiedergegeben wird.

In einer alternativen Ausführungsform umfassen die Gesten "kurzes Berühren", "Wischbewegung nach rechts" "Wischbewegung nach links" , "Haken nach oben", "Haken nach unten", "Halbkreis nach links" ( C), "Wischbewegung nach oben" und "Wischbewegung nach unten".

In einer alternativen Ausführungsform erfolgt nach der Gesteneingabe ein visuelles Feedback zu der erkannten Geste.

In einer alternativen Ausführungsform sind benutzerdefinierbare Gesten definierbar, die Funktionen zuordenbar sind, um diese bei einer Detektion auszuführen.

In einer alternativen Ausführungsform erfolgt ein Umschalten zwischen einem ersten Bedienmodus und einem zweiten Modus durch einen Schalter und/oder durch Sensoren, die erkennen, dass sich das Gerät im Fahrzeug befindet und/oder dass sich das Fahrzeug bewegt.

In einer alternativen Ausführungsform übernimmt ein Anwendungsprogramm den Verfahrensschritt, das die Standard-Bedienfläche des mobilen Endgerätes zumindest temporär ersetzt.

Ein weiter Teil der Erfindung ist eine Vorrichtung, die das Verfahren durch entsprechende Computer und Bildschirmmittel implementiert.

Die Erfindung besteht zum einen darin, Applikationen, beispielsweise für das Smartphone, in zweifacher Interaktionsmöglichkeit zu nutzen. Diese zweifache Nutzungsmöglichkeit besteht zum einen in der Nutzung in einem reinem GUI (Graphical User Interface) Modus oder alternativ in der Nutzung in einem reinen Gestenmodus. Die Umschaltung der Modi kann durch Betätigung eines Buttons erfolgen.

Die Erfindung besteht außerdem darin, die Inhalte welche im Grafikmodus sichtbar und lesbar sind, im Gestenmodus hörbar zu machen, in dem Sinne, dass sie dem Nutzer vorgelesen werden.

Die Erfindung besteht weiterhin in der Bereitstellung von verschiedenen Gesten, die es ermöglichen eine durchgehende Applikationsbedienung zu gewährleisten.

Außerdem besteht die Erfindung in der Darstellung einer rein gestenbasierten Interaktionslogik, die eine einfache Bedienung verschiedener Applikationen mit nur einer Geste ermöglicht. Wahlweise lassen sich beliebig viele Gesten integrieren.

Die Gestensteuerung basiert wiederum auf der Bereitstellung eines Touchscreens und einer Softwaregestützten Gestenbibliothek, welche in der Lage ist die Gesten zu interpretieren, so dass die Interpretationsergebnisse dann von einem übergeordneten Programm ausgewertet werden können und entsprechende Aktionen im Nutzer-Dialog angesprochen werde können.

Die herausragende Qualität der Erfindung besteht darin, dass dem Nutzer bei der Bedienung von Applikationen in besonderen Umgebungen (beispielsweise in Fahrzeugen), in denen eine normale handorientierte Bedienung zu viel Aufmerksamkeit erfordert, eine einfache Möglichkeit gegeben wird, mit wenigen intuitiven Gesten und einem dazugehörigen Sprachdialog die Applikationen komplett mit minimaler Ablenkung zu bedienen.

Diese Erfindung beschreibt Möglichkeiten, wie auf bestimmte Art und Weise unter Zuhilfenahme eines akustischen Interfaces und bestimmter Gesten verschiedene Aktionen und Reaktionen innerhalb einer Applikation bewirkt werden können.

Dabei wird insbesondere auf die gesamtheitliche gestenbasierte Steuerung, welche die Auswahl von Menü-Optionen, das gestenbasierte Vor- und Rückwärts ,Blättern' in verschiedenen Nachrichtenlisten, das Wechseln der Menüebenen, die gestenbasierte Anruf-Initiierung und die Start- Stopp Logik umfasst, eingegangen Gelöst wird diese Aufgabe durch ein Verfahren und eine Vorrichtung mit den Merkmalen unabhängiger Ansprüche.

Zur Realisierung der Aufgabenstellung wird davon ausgegangen, dass die einzelnen Endgeräte, auf denen die Applikationen gesteuert werden sollen, über einen Touchscreen wie auch über eine integrierte Software-Gestenbibliothek verfügen.

Weiterhin wird davon ausgegangen, dass auf dem Endgerät Nachrichten oder Prompts akustisch vorgelesen werden können. Dazu wird vorausgesetzt, dass im Endgerät selbst eine entsprechende Sprachsynthese (TTS- Text to Speech) Technologie verfügbar ist und genutzt werden kann oder ein entsprechender Dienst (TTS) über eine Netzwerkverbindung angebunden ist und genutzt werden kann.

Im Weiteren beschreibt die Erfindung ein grundsätzliches Verfahren, wie man aus einem Optionsraum (zum Beispiel 4 Optionen - E-Mail, SMS, Telefon, News) mit Hilfe eines akustischen Prompts und einer Geste eine Option auswählen kann.

Das Verfahren beruht auf der Methode des sequentiellen Ausspielens von einzelnen Optionen mit entsprechend festgelegten Pausen zwischen den Optionen. Die Pausen zwischen den Optionen dienen einer möglichen Interaktion zwischen System und Nutzer, um die jeweilige Option auszuwählen. Das heißt der Nutzer hat die Möglichkeit, in der Pause mit einer Geste zu agieren. Dies kann im einfachsten Fall eine Tap Geste sein.

Diese Geste wird als Auswahl auf die zuletzt ausgespielte Option interpretiert.

Dieses Verfahren der akustischen Präsentation und der zugehörigen gestenbasierten Selektion ermöglicht eine Auswahl einer Menüoption, welche ohne das aktive ,Hinschauen' auf das Display ermöglicht wird.

Damit lassen sich gerade im fahrzeugbezogenen Kontext Dialogsysteme realisieren, die mit minimaler Fahrerablenkung vorteilhaft nutzbar sind.

Ein weiteres Verfahren beschreibt die einfache Umschaltmöglichkeit zwischen Grafik- und Gestenmodus, welche an beliebiger Stelle im Menü erfolgen kann.

In einer bevorzugten Ausführungsform umfasst die Erfindung ein Verfahren zur Steuerung eines Endgerätes, vorzugsweise eines mobilen Endgerätes oder eines Fahrzeuginformationssystems, das einen Lautsprecher umfasst und das einen berührungsempfindlichen Bildschirm aufweist. Diese Bestandteile müssen nicht integral ausgebildet sein, sie können auch räumlich beabstandet sein. Das Endgerät umfasst einen ersten grafischen Bedienmodus, bei dem Informationen grafisch dargestellt werden, und eine Steuerung des Endgerätes über die Berührung von grafisch dargestellten Symbolen erfolgt, wobei die Berührung des Symbols eine Funktion auslöst. Das Verfahren ist gekennzeichnet durch die Schritte:
- Umschalten in einen zweiten Bedienmodus, der keinerlei Interaktion von grafischen Symbolen und Berührungen erlaubt. Das Umschalten zwischen dem ersten Bedienmodus und dem zweiten Modus erfolgt vorzugsweise durch einen Schalter, ein Menübutton und/oder durch Sensoren, die erkennen, dass sich das Gerät im Fahrzeug befindet und/oder, dass sich das Fahrzeug bewegt.
- Steuerung des Endgerätes lediglich durch eine geringe Anzahl von Gesten auf dem Bildschirm, die unabhängig von der Berührung von Symbolen Funktionen auf dem mobilen Endgerät auslösen;
- Ausgabe der Funktionsergebnisse über den Lautsprecher.

In einer weiteren alternativen Ausführungsform ist im zweiten Bedienmodus unabhängig von den Symbolen der gesamte berührungsempfindliche Bildschirm eine Eingabefläche für die Gesten.

In einer weiteren alternativen Ausführungsform wird im zweiten Bedienmodus ein Schlafmodus aktiviert, der die Ausgabe der Funktionsergebnisse auf dem Lautsprecher unterbricht, um diese dann zu einem späteren Zeitpunkt fortzusetzten, wobei der Schlafmodus vorzugsweise durch längeres Berühren des Bildschirms aktiviert wird. Ein Anschalten nach dem Schlafmodus erfolgt in der Regel durch erneutes Berühren.

In einer weiteren alternativen Ausführungsform wird eine Menüführung und/oder eine Auswahl von Optionen im zweiten Bedienmodus durch eine sequentielle Ausgabe von einzelnen Menüeinträgen/Optionen mit Pausen dargestellt, um in den Pausen eine Geste zu empfangen, die als Auswahl dient, um eine Funktion auszulösen.

In einer weiteren alternativen Ausführungsform wird nach längeren Pausen ein Landmarking durchgeführt, bei dem die aktuelle Position in einem Menü und/oder einer Auswahl über den Lautsprecher wiedergegeben wird.

In einer weiteren alternativen Ausführungsform sind die Gesten "kurzes Berühren", "langes Berühren", "Wischbewegung nach rechts" und "Wischbewegung nach links". Es sind ferner zusätzliche benutzerdefinierbare Gesten definierbar, denen Funktionen zuordenbar sind, um diese bei einer Erkennung der Geste auszuführen.

Das Verfahren wird vorzugsweise durch ein Anwendungsprogramm gesteuert, das die Verfahrensschritte übernimmt, und das die Standard- Bedienoberfläche des mobilen Endgerätes zumindest temporär ersetzt. Es wird somit eine neue Bedienoberfläche eingesetzt.

Ein weiterer Teil der Erfindung ist eine Vorrichtung, die das entsprechende Verfahren implementiert. Diese Vorrichtung ist vorzugsweise ein mobiles Telefon, ein PDA, ein Navigationssystem oder auch ein Bedienelement eines Fahrzeuges.

Das beschriebene Verfahren ermöglicht gegenüber dem heutigen Stand der Technik eine weitere Steuermöglichkeit von Applikationen im fahrzeugbezogenen Kontext, in dem eine möglichst geringe Aufmerksamkeit zur Steuerung von Applikationen gefordert ist.

Bisherige Systeme machen sich dafür fast ausschließlich die Sprachsteuerung zu Nutze. Die hier beschriebene Erfindung ermöglicht eine gegenüber der Sprachsteuerung noch simplere Interaktion - einfache Tap Geste - unter dem weiteren Vorteil, auch in geräuschbehafteten Umgebungen zuverlässig und uneingeschränkt zu funktionieren.

Mit dem Einsatz einer leicht erlernbaren Gestensteuerung und dem in dieser Erfindung beschriebenen Verfahren zur Nutzung selbiger, lassen sich auch komplexere Applikationen und Abläufe einfach und intuitiv bedienen.

### Figurenbeschreibung:

Im Folgenden werden die Figuren kurz beschrieben, ohne dass beabsichtigt ist, dass die Figuren beschränkend auf den Schutzumfang der Erfindung wirken.

### Es zeigt

Figur 1 : Grundvokabular im Gestenmodus
Figur 2: Einschalten des Vorlesemodus
Figur 3: Auswahl einer Menüoption
Figur 4: Navigation zur nächsthöheren Menüebene
Figur 5: Vorwärtsblättern zur nächsten Nachricht
Figur 6: Initiieren eines Anrufes
Figur 7: Tap Geste zum wechselseitigen Start/Stopp des Vorlesens

### Detaillierte Beschreibung der Ausführungsformen:

### Grafikmodus

Nach dem Einschalten wird im Initialzustand das Hauptmenü im Grafikmodus gestartet.
Der Grafikmodus basiert auf der herkömmlichen Bedienung mittels Touch-Screen (berührungsempfindlicher Bildschirm). Der Touch-Screen dient sowohl als grafische Ausgabemodalität als auch als Eingabemodalität. Hierzu werden die üblichen grafischen Eingabeelemente wie z.B. Menü, Links, Eingabefelder oder Buttons verwendet. Die Prinzipien, auf denen die Bedienung im Grafikmodus beruht, werden als bekannt vorausgesetzt und nicht weiter erläutert. Für das Umschalten vom Grafik- in den Sprachmodus kann im Falle einer On Board Unit ein entsprechender Hardware-Schalter oder im Falle eines Smartphones ein Software-Button vorgesehen werden. Anstelle des Buttons oder Schalters zum Umschalten in den Sprachmodus kann auch automatisch umgeschaltet werden, wenn die Anordnung über eine entsprechende Sensorik verfügt, die beispielsweise detektiert, wann das Auto fährt oder steht.
Der Grafikmodus gilt als der am besten geeignete Bedienmodus für den Fall, dass der Nutzer seine Hände und Augen in vollem Umfang beanspruchen kann, also immer dann, wenn das Auto steht: beispielsweise vor Beginn, nach Beendigung der Fahrt an der Ampel, oder generell in einem nicht fahrzeugbezogenen Kontext.

### Gesten- / Vorlesemodus

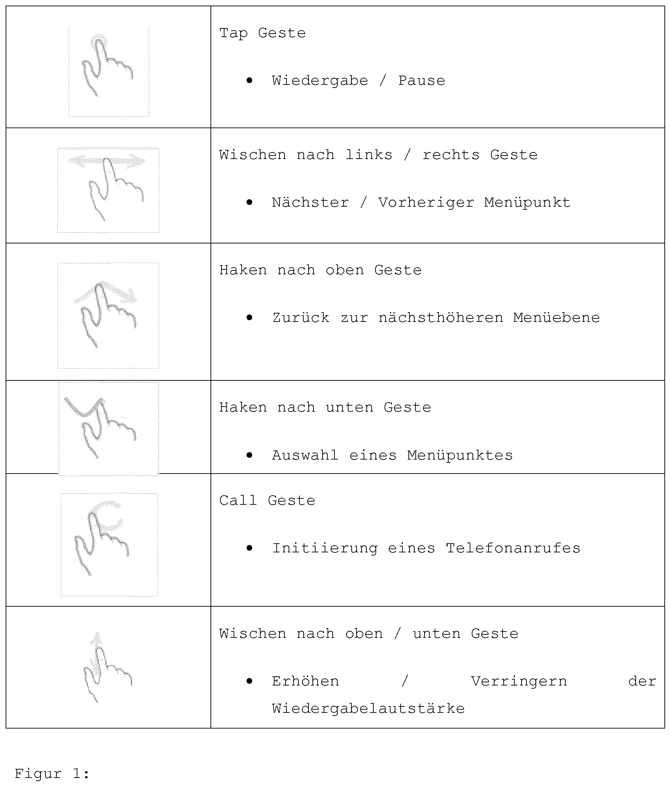

Im Gestenmodus interagiert der Nutzer mit dem System ausschließlich über den Touch-Screen. Im Vergleich zum Grafikmodus ist die Funktionalität des Touch-Screens jedoch stark reduziert, um die Ablenkung und Beanspruchung des Fahrers abseits der Fahraufgabe zu minimieren. Die Fig. 1 zeigt das Gestenvokabular. Um die Bedienung des Systems schnell zu erlernen und um dem Nutzer eine generelle Orientierung im Vorlesemodus zu ermöglichen, wird nach Aktivieren des Gestenmodus über das jeweilige Grafikmenü eine Art ,Milchglas' gelegt, um dem Nutzer anzuzeigen, dass er sich im Vorlesemodus befindet, bei dem die Hauptsächliche Wahrnehmung akustisch fokussiert ist. Der Milchglaseffekt dient dem Nutzer als zusätzliche Orientierung, da er ,schemenhaft' erkennt, wo er sich gerade im System befindet. Um diese Orientierung noch weiter zu erhöhen, wird die jeweilige Vorleseposition grafisch markiert. Diese Markierung ändert sich synchron zum gerade vorgelesenen Content.
Werden im Grafikmodus beispielsweise 4 Menükacheln dargestellt (bspw. Telefon, SMS, E-Mail, News) so sind diese im Vorlesemodus weiterhin unter einem Milchglas sichtbar, können aber nicht mehr direkt bedient werden.
Das System liest im Vorlesemodus nacheinander den Content der Menükacheln vor, wobei die jeweilige Vorleseposition zusätzlich grafisch markiert wird.
Die Auswahl der entsprechenden Funktion (bspw. Telefon, SMS, E-Mail, News) erfolgt zum Zeitpunkt des Vorlesens mit einer Auswahlgeste (Haken nach unten).
Somit kann der Nutzer im Vorlesemodus jede vorgelesene Option mit einer Geste auswählen und hat zusätzlich eine Orientierung an welcher Stelle im System er sich gerade befindet.

Um mit den wesentlichen Funktionen im Gestenmodus umgehen zu können, muss der Nutzer ein Grundvokabular aus nur 3 Gesten erlernen.
- Tap: kurzes Antippen des Touch Screen
- Wischen nach Links oder Rechts
- Haken nach oben oder unten

Zusätzlich steht noch eine weitere Geste zur Auswahl, welche in bestimmten Menüs für die Initiierung eines Anrufs genutzt werden kann (Call Geste)

Des Weiteren kann die Regelung der Wiedergabelautstärke ebenfalls durch Gesten erfolgen, eine Wischgeste nach oben erhöht-, eine Wischgeste nach unten verringert die Wiedergabelautstärke.

In Fig. 1 sind alle Gesten in ihrer Bedeutung dargestellt.

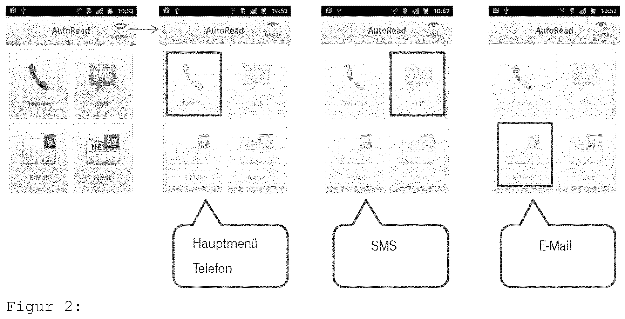

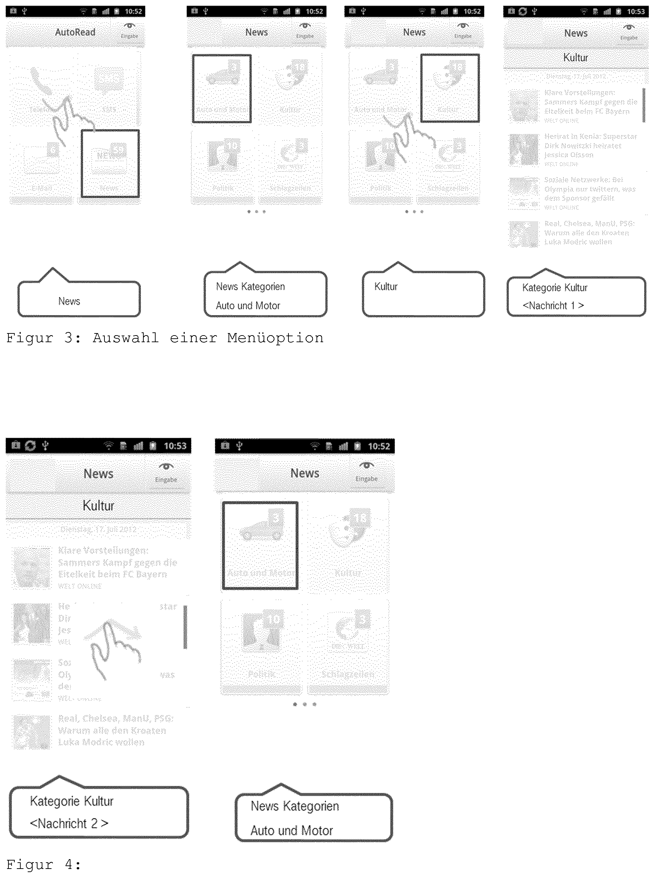

In Fig. 2 werden am Beispiel Einschalten des Vorlesemodus (Beispiel Hauptmenü) die wesentlichen Interaktionspattern des Gestenmodus exemplarisch am Beispiel eines Nutzerdialoges dargestellt. Nach dem Betätigen des Buttons Vorlesen schaltet die Applikation in den Vorlese- oder auch Gestenmodus. Über die Applikation legt sich ein Milchglas und alle Menüpunkte werden nacheinander mit einer definierten Pause vorgelesen. Eine geeignete Markierung gibt dem Nutzer zusätzlich zur akustischen Ausgabe eine visuelle Orientierung. Die Gestensteuerung ist aktiv. Der Nutzer kann jetzt die Applikation mit Gesten steuern. In Fig. 3 erfolgt die Auswahl einer Menüoption. Nach dem Vorlesen des Menüpunktes ,News' agiert der Nutzer mit einer ,Haken nach unten' Geste. Diese ist als Auswahl Geste definiert. Das System reagiert durch Umschalten zur ausgewählten Option, in diesem Beispiel dem Wechsel zum Menü ,News - Kategorien'. Beim Vorlesen des Menüpunktes Kultur agiert der Nutzer mit einer ,Haken nach unten' Geste. Diese ist als Auswahl Geste definiert. Das System reagiert durch Umschalten zur ausgewählten Option, in diesem Beispiel dem Wechsel zum Unter - Menü ,Kultur Nachrichten'. In diesem Menü werden alle 'Kultur-Nachrichten' nacheinander vorgelesen.
In Fig. 4 erfolgt eine Navigation zu einer höheren Ebene. Der Nutzer agiert während des Vorlesens mit einer ,Haken nach oben' Geste. Diese Geste ist als ,Wechsel zur nächsthöheren Menüebene' definiert. Das System schaltet in die nächsthöhere Menüebene - in diesem Fall wieder zurück zu den News-Kategorien.

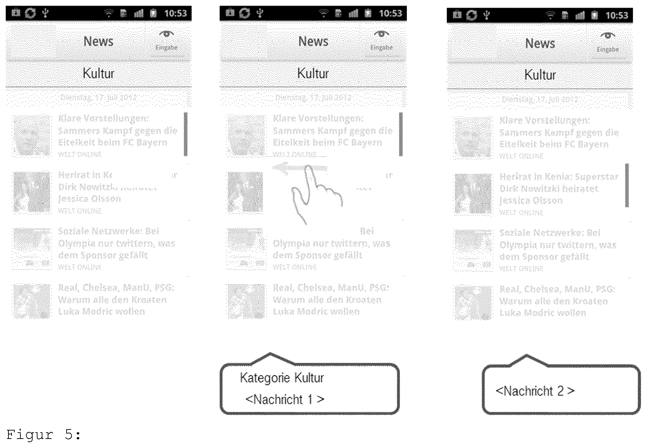

In Fig. 5 erfolgt ein Vorwärts' blättern' zur nächsten Nachricht. Während des Vorlesens der Nachricht 1 agiert der Nutzer mit einer 'Wischgeste', welche für ,Nächste Nachricht' definiert ist. Das System reagiert mit dem Vorlesen der nächsten Nachricht. Zusätzlich wird dem Nutzer ein visuelles Feedback über die aktuell vorgelesene Nachricht gegeben (Magenta Balken).

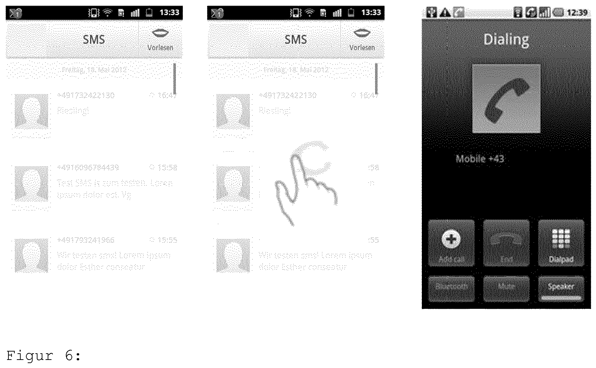

In Figur 6 ist eine Call Geste zum Initiieren eines Anrufes zu sehen.
Während des Vorlesens der SMS agiert der Nutzer mit einer ,C' (Call) Geste. Das System reagiert mit dem Wechsel in die Telefonie-Applikation und ruft den Absender der SMS an.

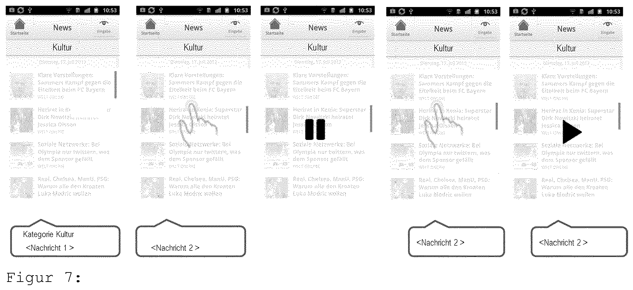

In Figur 7 ist eine Tap Geste zum wechselseitigen Start / Stopp des Vorlesens zu erkennen.

Während des Vorlesens der Nachricht 2 agiert der Nutzer mit einer 'Tap' Geste. Das System reagiert mit dem Stoppen des Vorlesens und zeigt dem Nutzer als Feedback das Stopp Symbol an. In dem Stopp Modus agiert der Nutzer erneut mit einer Tap Geste und das System setzt das Vorlesen fort.

### Wiedergabe / Pause

Um die akustische Wiedergabe zu unterbrechen wird die "Tab Geste" eingesetzt. Durch einfaches Berühren des Bildschirmes wird die Wiedergabe gestoppt (Pause).
Durch erneutes Berühren des Bildschirmes wird die Wiedergabe fortgesetzt.

### Menü / Optionsauswahl ("Haken nach unten" Geste)

Für die generelle Auswahl von Menüpunkten steht die "Haken nach unten" Geste zur Verfügung. Werden dem Nutzer Menüpunkte oder Listenelemente wie beispielsweise E-Mail oder News Header vorgelesen, kann er mit der "Haken nach unten" Geste diese Menüeinträge auswählen. Befindet sich der Nutzer zum Beispiel im Hauptmenü und es werden nacheinander die Optionen Telefon, SMS, E-Mail und News vorgelesen, kann der Nutzer wenn er E-Mail hört, diese Option mit einer "Haken nach unten" Geste auswählen und das System wechselt in die E-Mail Einträge und der Nutzer bekommt daraufhin die E-Mails vorgelesen.

### Navigation ("Haken nach oben" Geste)

Da Applikationen im Allgemeinen in einer Baumstruktur gestaltet sind, ist es für eine durchgängige Bedienung erforderlich, von den 'unteren Ästen' auch wieder zurück zu den 'Hauptästen' zu gelangen.
Diese Funktion wird im Gestenmodus durch die "Haken nach oben" Geste abgebildet.
Befindet sich der Nutzer beispielsweise in der Menüebene News-Details, in der er sich gerade News Details vorlesen lässt so kommt er mit einer "Haken nach oben" Geste zurück in das Menü 'News-Liste', mit einer weiteren "Haken nach oben" Geste zurück in das Menü ,News-Kategorien' und mit einer weiteren "Haken nach oben" Geste ganz zurück in das Hauptmenü.

### Vorherige / Nächste ("Wisch Geste nach links oder rechts")

Um innerhalb einer Menü-Ebene zwischen den verschiedenen Content-Einträgen zu navigieren (zu,blättern') wird die Wischgeste implementiert.
Diese ermöglicht beispielsweise im Hauptmenü das Vorwärts- und Rückwärts Navigieren zwischen Telefon, E-Mail, SMS und News oder im Detail-Menü der E-Mails das Vorwärts-Navigieren zur nächsten E-Mail oder das Rückwärts-Navigieren zur vorherigen E-Mail.

### Anruf-Initiierung ("Call Geste")

Um im Gestenmodus auf eine Nachricht reagieren zu können, ohne in einem Adressbuch nachsehen zu müssen, wird die "Call Geste" genutzt. Hört sich der Nutzer beispielsweise seine SMS Nachrichten an und entscheidet, den Absender zu kontaktieren, kann er dies durch eine einfache Ausführung der "Call Geste" tun. Durch das Zeichnen des Buchstaben "C", wie Call, wird ein Anruf zu dem jeweiligen Absender der Nachricht initiiert.

### Lautstärkeregelung ("Wischgeste nach oben / unten")

Die Wischgeste nach oben bzw. nach unten ermöglicht die gestenbasierte Erhöhung oder Verringerung der Wiedergabelautstärke.

### Visuelles Feedback der Gestensteuerung

Nach jeder Gesteneingabe erfolgt ein visuelles Feedback, welche Geste erkannt wurde. Dazu wird ein entsprechendes Symbol nach der Gesteneingabe für einen bestimmten Zeitraum eingeblendet und dann die der Geste zugehörige Aktion ausgeführt.

Über das Grundvokabular hinaus können jedoch auch noch zusätzliche Gesten definiert werden, die es dem geübten Nutzer erlauben, noch effizienter mit dem Dialogsystem interagieren zu können. Solche zusätzlichen Befehle können beispielsweise dazu dienen, globale Befehle wie "Hauptmenü" oder "Zurück" überall zugänglich zu machen oder, in komplexeren Menübäumen "Short Cuts" auf bestimmte Menüpunkte in Untermenüs zu realisieren. Der geübte Nutzer kann mit Hilfe solcher zusätzlichen Gesten Menüpunkte in Submenüs direkt aufrufen, ohne dass er den Umweg über die Menüstruktur machen muss.

### Contentausgabe

Die Ausgabe von Content beschränkt sich im Gestenmodus ausschließlich auf die Ausgabe von Audio- oder Textdaten. Zur Ausgabe von Texten wird die Text-to-Speech Technologie eingesetzt, die Text automatisch in gesprochene Sprache wandelt. Da insbesondere im Kontext der Nutzung im Auto von einem ständigen Wechsel zwischen Phasen mit starker oder weniger starker Beanspruchung des Fahrers durch die Fahraufgabe zu rechnen ist, muss dem Fahrer die Gelegenheit gegeben werden, insbesondere längere Texte oder Audios jederzeit unterbrechen zu können, wenn die Fahraufgabe seine volle Konzentration erfordert, und später nochmal zu wiederholen, wenn es die Fahrsituation wieder erlaubt. Deswegen kann die akustische Ausgabe von Content jederzeit durch Tap in den Pausenmodus werden. Durch eine erneute Tap Geste wird die Wiedergabe fortgesetzt.
So kann mit einer Geste eine zweifache Funktionalität, Wiedergabe und Pause, erreicht werden.(siehe Abbildung 6) Insbesondere bei der Ausgabe längerer Texte ist es sinnvoll, die Texte in kürzere Segmente zu zerlegen, die vom Dialogsystem nacheinander vorgelesen werden. Wenn der Nutzer das Vorlesen des Textes zuvor durch Tap unterbrochen hat, muss das System bei erneuter Wiedergabe den Text nicht von neuem beginnen, sondern kann mit dem letzten, noch nicht beendeten Textsegment fortfahren. Zum Navigieren stehen dem Nutzer zusätzlich die Gesten "Wischen nach links" und "Wischen nach rechts" auf dem Touch-Screen zur Verfügung.

Ein Anwendungsbeispiel für das Vorlesen von strukturiertem Content ist das Vorlesen einer Liste von Elementen, z.B. die Nachrichten einer Email- oder SMS-Inbox. Solange der Nutzer nicht aktiv wird, liest das Dialogsystem die Nachrichten nacheinander bis zum Ende der Inbox vor. Der Nutzer kann mit einer Tab Geste die Wiedergabe der Nachrichten jederzeit unterbrechen, sich dann anderen Aufgaben zuwenden und später das Abhören der Nachrichten durch Tap auf den Touch-Screen wieder fortsetzen. Das Dialogsystem setzt dann die Ausgabe der Nachrichten mit der Nachricht fort, die zuletzt unterbrochen wurde.

Die Abbildungen 1 bis 6 zeigen die prinzipielle Darstellung des Einsatzes unterschiedlicher Gesten.

## Patentansprüche

1. Verfahren zur Steuerung eines mobilen Endgerätes in einem Fahrzeug oder eines Fahrzeuginformationssystem, das einen Lautsprecher umfasst und das einen berührungsempfindlichen Bildschirm aufweist, wobei das Endgerät einen ersten grafischen Bedienmodus umfasst, bei dem Informationen grafisch dargestellt werden, und eine Steuerung des Endgerätes über die Berührung von grafisch dargestellten Symbolen erfolgt, wobei die Berührung des Symbols eine Funktion auslöst, **gekennzeichnet durch** die Schritte:
- Umschalten in einen zweiten Bedienmodus, der grundsätzlich keine Interaktion von grafischen Symbolen und Berührungen erlaubt, oder lediglich mit einem grafischen Symbol versehen ist, um in den Grafikmodus zurückwechseln;
- Steuerung des Endgerätes lediglich **durch** eine geringe Anzahl von Gesten auf dem Bildschirm, die unabhängig von der Berührung von Symbolen Funktionen auf dem mobilen Endgerät auslösen; **dadurch** gekennzeichnet, - dass die Ausgabe der Funktionsergebnisse über den Lautsprecher; erfolgt eine Menüführung und/oder eine Auswahl von Optionen im zweiten Bedienmodus **durch** eine sequentielle Ausgabe von einzelnen Menüeinträgen/Optionen mit Pausen über den Lautsprecher erfolgt, um in den Pausen eine Geste zu empfangen, die als Auswahl dient, um eine Funktion auszulösen und wobei nach längeren Pausen ein Landmarking durchgeführt wird, bei dem die aktuelle Position in einem Menü und/oder einer Auswahl über den Lautsprecher wiedergegeben wird.

2. Das Verfahren nach dem vorhergehenden Anspruch, wobei im zweiten Bedienmodus der überwiegende Teil des berührungsempfindlichen Bildschirms eine Eingabefläche für die Gesten darstellt unabhängig von Symbolen.

3. Das Verfahren nach dem vorhergehenden Anspruch, bei dem im zweiten Bedienmodus der überwiegende Teil des berührungsempfindlichen Bildschirms eine Eingabefläche für die Gesten darstellt und mit einem 'Milchglas-Effekt' überzogen ist, welcher die darunterliegende grafische Bedienoberfläche anzeigt,
wobei vorzugsweise, im zweiten Bedienmodus der überwiegende Teil des berührungsempfindlichen Bildschirms eine Eingabefläche für die Gesten darstellt, mit einem 'Milchglas-Effekt' überzogen ist, und den aktuell vorgelesenen Content grafisch markiert, wobei vorzugsweise im zweiten Bedienmodus die Markierung des vorgelesenen Contents synchron zur Vorleseposition mitgeführt wird.

4. Das Verfahren nach einem der vorhergehenden Ansprüche, wobei im zweiten Bedienmodus ein Pausenmodus aktiviert wird, der die Ausgabe der Funktionsergebnisse auf dem Lautsprecher unterbricht, um diese dann zu einem späteren Zeitpunkt fortzusetzten, wobei der Pausenmodus vorzugsweise durch einfaches Berühren des Bildschirms (Tap Geste) aktiviert wird, wobei vorzugsweise
der Pausenmodus durch erneutes Berühren beendet und die akustische Wiedergabe fortgesetzt wird.

5. Das Verfahren nach einem oder mehreren der vorhergehenden Ansprüche, wobei die Gesten "kurzes Berühren", "Wischbewegung nach rechts" "Wischbewegung nach links" , "Haken nach oben", "Haken nach unten", "Halbkreis nach links" (C), "Wischbewegung nach oben" und "Wischbewegung nach unten" umfassen.

6. Das Verfahren nach einem oder mehreren der vorhergehenden Ansprüche, wobei nach der Gesteneingabe ein visuelles Feedback zu der erkannten Geste erfolgt.

7. Das Verfahren nach einem oder mehreren der vorhergehenden Ansprüche, wobei benutzerdefinierbare Gesten definierbar sind, die Funktionen zuordenbar sind, um diese bei einer Detektion auszuführen.

8. Das Verfahren nach einem oder mehreren der vorhergehenden Ansprüche, wobei ein Umschalten zwischen einem ersten Bedienmodus und einem zweiten Modus durch einen Schalter und/oder durch Sensoren erfolgt, die erkennen, dass sich das Gerät im Fahrzeug befindet und/oder dass sich das Fahrzeug bewegt.

9. Das Verfahren nach einem oder mehreren der vorhergehenden Ansprüche, wobei ein Anwendungsprogramm den Verfahrensschritt übernimmt, das die Standard- Bedienfläche des mobilen Endgerätes zumindest temporär ersetzt.

10. Mobiles Endgerät zur Verwendung als Fahrzeuginformationssystem, das einen Lautsprecher umfasst und das einen berührungsempfindlichen Bildschirm aufweist, mit einer Steuereinheit, die einen ersten grafischen Bedienmodus steuert, bei dem Informationen grafisch dargestellt werden, und eine Steuerung des Endgerätes über die Berührung von grafisch dargestellten Symbolen erfolgt, wobei die Berührung des Symbols eine Funktion auslöst, umfassend:
- einen Schalter, der ein Umschalten in einen zweiten Bedienmodus erlaubt, wobei der Bedienmodus keine Interaktion von grafischen Symbolen und Berührungen erlaubt oder lediglich mit einem grafischen Symbol versehen ist, um in den Grafikmodus zurückwechseln; die Steuereinheit, steuert das Endgerät in dem zweiten Bedienmodus lediglich durch eine geringe Anzahl von Gesten auf dem Bildschirm, die unabhängig von der Berührung von Symbolen Funktionen auf dem mobilen Endgerät auslösen; **dadurch gekennzeichnet, dass**
- eine Lautsprechereinheit eine Ausgabe der Funktionsergebnisse über den Lautsprecher vornimmt;
die Steuereinheit ausgebildet ist, um eine Menüführung und/oder eine Auswahl von Optionen im zweiten Bedienmodus durch eine sequentielle Ausgabe von einzelnen Menüeinträgen/Optionen mit Pausen erfolgen zu lassen, um in den Pausen eine Geste zu empfangen, die als Auswahl dient, um eine Funktion auszulösen, und
wobei die Steuereinheit ausgebildet ist, um nach längeren Pausen ein Landmarking durchzuführen, bei dem die aktuelle Position in einem Menü und/oder einer Auswahl über den Lautsprecher wiedergegeben wird.

11. Mobiles Endgerät nach dem vorhergehenden Anspruch, wobei im zweiten Bedienmodus der überwiegende Teil des berührungsempfindlichen Bildschirms unabhängig von Symbolen eine Eingabefläche für die Gesten darstellt.

12. Mobiles Endgerät nach einem der vorhergehenden Endgeräte-Ansprüche, wobei im zweiten Bedienmodus ein Pausenmodus durch die Steuereinheit aktivierbar ist, der die Ausgabe der Funktionsergebnisse auf dem Lautsprecher unterbricht, um diese dann zu einem späteren Zeitpunkt fortzusetzten, wobei der Pausenmodus vorzugsweise durch kurzes Berühren des Bildschirms aktivierbar ist,
wobei vorzugsweise die Steuereinheit ausgebildet ist, um ein Anschalten nach dem Pausenmodus durch erneutes Berühren erfolgen zu lassen.

13. Mobiles Endgerät nach einem oder mehreren der vorhergehenden Endgeräte-Ansprüche, wobei benutzerdefinierbare Gesten definierbar sind, die Funktionen zuordenbar sind, um diese bei einer Detektion auszuführen.

14. Mobiles Endgerät nach einem oder mehreren der vorhergehenden Endgeräte-Ansprüche, wobei ein Umschalten zwischen einem ersten Bedienmodus und einem zweiten Modus durch einen mechanischen oder logischen Schalter und/oder Menübuttons und/oder durch Schaltersensoren erfolgt, die erkennen, dass sich das Gerät im Fahrzeug befindet und/oder dass sich das Fahrzeug bewegt.

## Claims

1. Method for controlling a mobile terminal in a vehicle or a vehicle information system which comprises a loudspeaker and which has a touch-sensitive screen, the terminal comprising a first graphical operating mode in which information is displayed graphically, and the terminal being controlled by touching graphically displayed symbols, the touching of the symbol triggering a function, **characterized by** the steps-switching to a second operating mode, which in principle does not allow interaction of graphical symbols and touches, or is only provided with a graphical symbol to switch back to the graphical mode;
- controlling the terminal device merely by a small number of gestures on the screen, which trigger functions on the mobile terminal device independently of the touch of symbols **characterised in that** the output of the function results is effected via the loudspeaker a menu navigation and/or a selection of options in the second operating mode is carried out by a sequential output of individual menu items/options with pauses via the loudspeaker, in order to receive a gesture in the pauses which serves as a selection to trigger a function, and wherein after longer pauses a landmarking is carried out in which the current position in a menu and/or a selection is reproduced via the loudspeaker.

2. The method according to the previous claim, whereby in the second operating mode the predominant part of the touch-sensitive screen represents an input surface for the gestures independent of symbols.

3. The method according to the previous claim, in which in the second operating mode the predominant part of the touch-sensitive screen represents an input surface for the gestures and is covered with a 'frosted glass effect' which displays the underlying graphical user interface,
wherein preferably, in the second operating mode, the predominant part of the touch-sensitive screen represents an input surface for the gestures, is covered with a 'frosted glass effect', and graphically marks the currently read content, wherein preferably
in the second operating mode, the marking of the read content is synchronously moved along with the reading position.

4. The method according to one of the preceding claims, whereby in the second operating mode a pause mode is activated which interrupts the output of the function results on the loudspeaker in order to continue them at a later point in time, whereby the pause mode is preferably activated by simply touching the screen (tap gesture), preferably
the pause mode is ended by touching again and the acoustic playback is continued.

5. The procedure according to one or more of the preceding claims, the gestures comprising "short touch", "wiping movement to the right", "wiping movement to the left", "hook up", "hook down", "semi-circle to the left" (C), "wiping movement up" and "wiping movement down".

6. The procedure according to one or more of the preceding claims, whereby visual feedback on the recognized gesture is given after the gesture input.

7. The procedure according to one or more of the preceding claims, whereby user-definable gestures can be defined, the functions can be assigned to perform them in case of detection.

8. The method according to one or more of the preceding claims, wherein switching between a first operating mode and a second mode is performed by a switch and/or by sensors which detect that the device is in the vehicle and/or that the vehicle is moving.

9. The method according to one or more of the preceding claims, whereby an application program takes over the method step, which at least temporarily replaces the standard user interface of the mobile terminal.

10. Mobile terminal for use as a vehicle information system, which comprises a loudspeaker and which has a touch-sensitive screen, having a control unit which controls a first graphical operating mode in which information is displayed graphically, and the terminal is controlled by touching graphically displayed symbols, the touching of the symbol triggering a function,
comprising:-
a switch which allows switching to a second operating mode, wherein the operating mode does not allow interaction of graphical symbols and touches or is only provided with a graphical symbol to switch back to the graphics mode; the control unit, controls the terminal in the second operating mode only by a small number of gestures on the screen which trigger functions on the mobile terminal independently of the touch of symbols; **characterized in that** a loudspeaker unit outputs the function results via the loudspeaker;
the control unit is designed to allow menu navigation and/or selection of options in the second operating mode by sequential output of individual menu items/options with pauses, in order to receive a gesture in the pauses which serves as a selection to trigger a function, and
wherein the control unit is designed to carry out landmarking after longer pauses, in which the current position is reproduced in a menu and/or a selection via the loudspeaker.

11. Mobile terminal according to the previous claim, whereby in the second operating mode the predominant part of the touch-sensitive screen represents an input surface for the gestures independently of symbols.

12. Mobile terminal according to one of the preceding terminal claims, wherein in the second operating mode a pause mode can be activated by the control unit, which interrupts the output of the function results on the loudspeaker in order to then continue these at a later time, wherein the pause mode can preferably be activated by briefly touching the screen, whereby preferably the control unit is designed to be switched on after the pause mode by touching it again.

13. Mobile terminal according to one or more of the preceding terminal claims, whereby user-definable gestures can be defined, which can be assigned to functions in order to execute them upon detection.

14. Mobile terminal according to one or more of the preceding terminal claims, wherein switching between a first operating mode and a second mode is effected by a mechanical or logical switch and/or menu buttons and/or by switch sensors which detect that the device is in the vehicle and/or that the vehicle is moving.

## Revendications

1. Un procédé de commande d'un terminal mobile au sein d'un véhicule ou d'un système d'information de véhicule comprenant un haut-parleur et doté d'un écran tactile, le terminal comprenant un premier mode de fonctionnement graphique dans lequel les informations sont affichées graphiquement, et le contrôle du terminal étant effectué en touchant des symboles représentés graphiquement, le toucher d'un symbole déclenchant une fonction, **caractérisée par** les étapes:
- passage à un deuxième mode de fonctionnement, qui ne permet fondamentalement aucune interaction de symboles graphiques et de touchés, ou qui est uniquement fourni avec un symbole graphique pour revenir au mode graphique ;
- commande du terminal uniquement par un petit nombre de gestes sur l'écran qui déclenchent des fonctions sur le terminal mobile indépendamment du toucher des symboles **caractérisé en ce que** la sortie des résultats fonctionnels est effectuée via le haut-parleur, un guidage de menu et/ou une sélection d'options dans le deuxième mode de fonctionnement étant effectué par une sortie séquentielle d'éléments/options de menu individuelles avec des pauses via le hautparleur, afin de recevoir un geste pendant les pauses servant à la sélection pour déclencher une fonction, et dans lequel à la suite de pauses plus longues un marquage est effectué, dans lequel la position actuelle dans un menu et/ou une sélection est reproduite via le haut-parleur.

2. Le procédé selon la revendication précédente dans lequel, dans le deuxième mode de fonctionnement, la plus grande part de l'écran tactile représente une surface de saisie pour les gestes indépendamment des symboles.

3. Le procédé selon la revendication précédente dans lequel, dans le deuxième mode de fonctionnement, la plus grande partie de l'écran tactile représente une zone de saisie pour les gestes et est recouverte d'un "effet de verre dépoli" qui affiche l'interface utilisateur graphique en arrière-plan, dans lequel, de préférence, dans le deuxième mode de fonctionnement, la partie principale de l'écran tactile représente une zone de saisie pour les gestes, est recouverte d'un « effet de verre dépoli »' et marque graphiquement le contenu en cours de lecture, dans lequel de préférence, dans le second mode de fonctionnement, le marquage du contenu de lecture est déplacé de manière synchrone le long de la position de lecture.

4. Le procédé selon l'une des revendications précédentes dans lequel, dans le deuxième mode de fonctionnement, on active un mode pause qui interrompt la sortie des résultats de la fonction sur le haut-parleur afin de les poursuivre ensuite ultérieurement, dans lequel le mode pause est de préférence activé par simple toucher de l'écran (geste de tape), de préférence le mode pause est achevé par un nouveau touché et la lecture acoustique se poursuit.

5. Le procédé selon une ou plusieurs des revendications précédentes, dans lequel les gestes se composent de : "toucher court", "mouvement de balayage vers la droite" "mouvement de balayage vers la gauche", "accrochage vers le haut", "accrochage vers le bas", "demi-cercle gauche" (C), "Glisser haut" et "Glisser bas".

6. Le procédé selon une ou plusieurs des revendications précédentes, dans lequel un retour visuel est apporté à la suite de la reconnaissance d'un geste.

7. Le procédé selon une ou plusieurs des revendications précédentes, dans lequel pouvent être définis des gestes définissables par l'utilisateur et les fonctions peuvent être leur être attribuées afin de les exécuter en cas de détection.

8. Le procédé selon une ou plusieurs des revendications précédentes, dans lequel un basculement entre un premier mode de fonctionnement et un deuxième mode est effectué par un commutateur et/ou par des capteurs qui reconnaissent que le dispositif est dans le véhicule et/ou que le véhicule se déplace.

9. Le procédé selon une ou plusieurs des revendications précédentes, dans lequel un programme d'application reprend l'étape de procédé qui remplace au moins temporairement la surface de fonctionnement standard du terminal mobile.

10. Un terminal mobile destiné à être utilisé comme système d'information sur un véhicule, qui comprend un haut-parleur et qui a un écran tactile, avec une unité de commande qui commande un premier mode de fonctionnement graphique dans lequel les informations sont affichées graphiquement et le terminal est commandé en touchant des symboles représentés graphiquement, dans lequel le toucher du symbole déclenche une fonction, comprenant:
un commutateur qui permet de basculer vers un deuxième mode de fonctionnement, dans lequel le mode de fonctionnement ne permet pas l'interaction de symboles graphiques et de touches ou simplement pourvu d'un symbole graphique afin de revenir en mode graphique; l'unité de commande commande le terminal dans le deuxième mode de fonctionnement uniquement au moyen d'un petit nombre de gestes sur l'écran qui déclenchent des fonctions sur le terminal mobile indépendamment du toucher des symboles; **caractérisé en ce qu'**une unité de haut-parleur génère en sortie des résultats fonctionnels via le haut-parleur ;
l'unité de commande étant conçue pour permettre la navigation dans les menus et/ou une sélection d'options dans le deuxième mode de fonctionnement par une sortie séquentielle des éléments/options de menu individuels avec des pauses, afin de permettre la détection d'un geste pendant une pause servant de sélection pour déclencher une fonction, et dans lequel la position courant est reproduite dans un menu et/ou une sélection via le haut-parleur.

11. Le terminal mobile selon la revendication précédente dans lequel, dans le deuxième mode de fonctionnement, la plus grande part de l'écran tactile représente une zone de saisie pour les gestes indépendamment des symboles.

12. Un dispositif terminal mobile selon l'une des revendications précédentes dans lequel, dans le deuxième mode de fonctionnement, on peut activer un mode pause au moyen de l'unité de commande, ce qui interrompt la sortie des résultats de la fonction sur le haut-parleur afin de les poursuivre ensuite plus tard, dans lequel de préférence, le mode pause peut être activé en touchant brièvement l'écran, dans lequel l'unité de commande est de préférence conçue pour être mise en marche à la suite du mode pause par un nouveau contact tactile.

13. Le terminal mobile selon une ou plusieurs des revendications de terminal précédentes, dans lequel des gestes définissables par l'utilisateur peuvent être définis, les fonctions pouvant leur être attribuées afin de les exécuter lors de la détection.

14. Le terminal mobile selon une ou plusieurs des revendications de terminal précédentes, dans lequel la commutation entre un premier mode de fonctionnement et un deuxième mode est effectuée au moyen d'un interrupteur mécanique ou d'un commutateur logique et/ou des boutons de menu et/ou des capteurs de commutation qui reconnaissent que l'appareil est dans le véhicule et/ou que le véhicule se déplace.
